# EUROPÄISCHE PATENTSCHRIFT

(11) **EP 2 614 037 B1**
(45) Veröffentlichungstag und Bekanntmachung des Hinweises auf die Patenterteilung: **01.04.2015**
(21) Anmeldenummer: 11746166.5
(22) Anmeldetag: 21.07.2011
(51) Int. Cl.: C01G 41/00, B01J 23/00, B01J 23/30, B01J 35/00

(54) **FOTOKATALYSATOR AUF ZINNWOLFRAMAT-BASIS SOWIE DESSEN HERSTELLUNG**
TIN TUNGSTATE-BASED PHOTOCATALYST AND PRODUCTION THEREOF
PHOTOCATALYSEUR À BASE DE TUNGSTATE D'ÉTAIN AINSI QUE SA FABRICATION

(30) Priorität: 03.03.2011 DE 102011012930; 07.09.2010 DE 102010044553
(43) Veröffentlichungstag der Anmeldung: 17.07.2013
(73) Patentinhaber: Karlsruher Institut Für Technologie (KIT), 76131 Karlsruhe (DE)
(72) Erfinder: FELDMANN, Claus, 76275 Ettlingen (DE); UNGELENK, Jan, 76646 Bruchsal (DE)
(74) Vertreter: Müller-Boré & Partner Patentanwälte PartG mbB
(86) Internationale Anmeldenummer: PCT/EP2011/003666
(87) Internationale Veröffentlichungsnummer: WO 2012/031645

(56) Entgegenhaltungen:
- JAN UNGELENK ET AL: "Nanoscale [beta]-Sn1-nWO4.n[alpha]-Sn-A highly efficient photocatalyst for daylight-driven degradation of organic dyes and its real "green" synthesis", APPLIED CATALYSIS. B, ENVIRONMENTAL, Bd. 102, Nr. 3-4, 1. Februar 2011 (2011-02-01), Seiten 515-520, XP55009496, ISSN: 0926-3373, DOI: 10.1016/j.apcatb.2010.12.033
- IN-SUN CHO ET AL: "Photophysical, Photoelectrochemical, and Photocatalytic Properties of Novel SnWO 4 Oxide Semiconductors with Narrow Band Gaps", JOURNAL OF PHYSICAL CHEMISTRY C, Bd. 113, Nr. 24, 18. Juni 2009 (2009-06-18), Seiten 10647-10653, XP55009543, ISSN: 1932-7447, DOI: 10.1021/jp901557z in der Anmeldung erwähnt
- J. SOLIS ET AL: "Characterization of phase structures in semiconducting SnWO4 powders by Mössbauer and Raman spectroscopies", PHYSICAL REVIEW B, Bd. 57, Nr. 21, 1. Juni 1998 (1998-06-01), Seiten 13491-13500, XP55009502, ISSN: 0163-1829, DOI: 10.1103/PhysRevB.57.13491

## Beschreibung

Die vorliegende Erfindung betrifft die nicht-stöchiometrische Oxidverbindung mit der Formel SnₓWO₄ mit 0,6 ≤ x < 1, vorzugsweise 0,6 ≤ x ≤ 0,99, noch mehr bevorzugt, 0,9 ≤ x ≤ 0,99, aufgebaut aus gelbem β-Zinnwolframat (β-SnWO₄), und ein Verfahren zu deren Herstellung sowie deren Verwendung als Fotokatalysator, insbesondere zur Wasserreinigung, einschließlich der Entfernung von Schmutz bzw. Flecken von Oberflächen wie z.B. Fassadenputz (Stichwort "Selbstreinigungseffekt"), sowie zur Wasserspaltung bzw. Wasserstoffgenerierung.

Zwei bedeutende Herausforderungen des 21. Jahrhunderts werden die Verknappung von Energierohstoffen und die Verknappung von Wasser sein. Grundsätzlich könnte die Fotokatalyse die Lösung für beide Probleme bieten. Diese oft als "grün" bezeichnete Technologie vermag nicht nur Wasser in die Elemente zu spalten und dabei den Energieträger Wasserstoff freizusetzen, sondern auch organische Schadstoffe abzubauen, und könnte so für die Abwasseraufbereitung genutzt werden.

Da sich Metalloxide leicht darstellen lassen und chemisch stabil sind, werden diese allgemein als zweckmäßigste Fotokatalysatoren angesehen. Das Paradebeispiel ist TiO₂, das nach wie vor höchste katalytische Wirksamkeit unter UV-Anregung zeigt. Auf der anderen Seite ist TiO₂ - genau wie andere binäre Metalloxide - angesichts seiner großen Bandlücke (3,2 eV) unter sichtbarem Licht praktisch inaktiv. Zweckdienlicher wäre ein Fotokatalysator, der im solaren Spektrum arbeitet, das nur einen kleinen Anteil an UV-Licht enthält. Dies gilt nicht nur für Entwicklungsländer, in denen in großen Teilen die Sonne die einzige verfügbare Energiequelle ist, sondern auch für Industriestaaten, in denen ein solcher Fotokatalysator im Vergleich zu TiO₂ als Stand der Technik von großem ökonomischem Vorteil wäre.

Die Wasserspaltung unter sichtbarem Licht erfordert dabei eine hinreichend kleine Bandlücke einerseits und geeignete energetische Lagen der die Bandlücke begrenzenden Energieniveaus andererseits. So vermag ein Material nur dann fotokatalytisch Wasserstoff freizusetzen, wenn die Unterkante seines Leitungsbandes in Bezug auf die Normalwasserstoffelektrode negativ ist. Die Entwicklung von Sauerstoff erfordert hingegen, dass der Oberkante des Valenzbandes ein positiverer Wert als dem des Redoxpotentials von O₂/H₂O (1,23 V) zukommt. Letzteres legt somit zugleich die Mindestgröße für die Bandlücke fest. Entsprechend würde theoretisch IR-Strahlung von 1100 nm für die Wasserspaltung genügen.

Zur Erfüllung der Bedingung einer ausreichend kleinen Bandlücke hat es sich als zielführende Strategie herausgestellt, zu multinären Oxiden überzugehen. Durch Hybridisierung der Orbitale geeignet gewählter Elemente lässt sich gegenüber den entsprechenden, jeweiligen binären Oxiden eine Verengung der Bandlücke erreichen, so dass die resultierenden multinären fotokatalytischen Verbindungen signifikant auf sichtbares Licht ansprechen. Beispiele umfassen unter anderem CaBi₂O₄, BiSbO₄, Bi₂WO₆, BiVO₄ bzw. Ag₃PO₄. Die meisten bekannten Fotokatalysatoren mit hinreichend kleiner Bandlücke erfüllen aber nicht zugleich die zweite Bedingung, d.h. die begrenzenden Bandkanten weisen nicht die für die Wasserspaltung geeignete Energieniveau-Lage auf. Damit ist dann eine vollständige Spaltung von Wasser in die Elemente nicht mehr möglich; vgl. A.Kudo and Y. Miseki, Chem. Soc. Rev., 2009, 38, 253-278.

Aus diesem Grund sind für den Ablauf der vollständigen Reaktion Opferreaktanden notwendig, z.B. Silbernitrat, welches im Falle von z.B. Bi₂WO₆, BiVO₄ und Ag₃PO₄ als Elektronenakzeptor fungiert und nur so die Freisetzung von Sauerstoff durch Wasseroxidation ermöglicht; vgl. Z.Yi, J.Ye, N.Kikugawa, T.Kako, S.Ouyang, H. Stuart-Williams, H.Yang, J. Cao, W. Luo, Z.Li, Y. Liu, and R.L.Withers, Nat. Mat., 2010, 9, 559-564. Wird jedoch ein solcher Fotokatalysator elektrochemisch mit einem zweiten verschaltet, welcher unter Elektronenaufnahme nur für die Wasserstofffreisetzung geeignet ist, lässt sich ein solar aktiviertes Gesamtsystem für die vollständige Wasserspaltung realisieren, welches vollständig ohne Opferreaktanden auskommt.

Ein solches Z-Schema folgt dem Vorbild der Natur, die für die Fotosynthese in entsprechender Weise ebenfalls zwei Fotosysteme verwendet. Die Trennung der Wasserspaltung in zwei Halbreaktionen bietet den Vorteil, dass sich letztere auch örtlich, z.B. durch Kompartimentierung, trennen lassen. Auf diese Weise kann die Rückreaktion, d.h. die Synthese von Wasser aus den Elementen, unterdrückt und so die Effizienz der Wasserspaltung verbessert werden. Die Nutzung von Z-Schemata gilt insofern als erfolgsversprechender Ansatz für die solar aktivierte fotokatalytische Wasserspaltung.

Die effiziente solar betriebene Wasserstoffgenerierung erfordert daher die Entwicklung geeigneter fotokatalytischer Materialien, die entweder für sich genommen effizient die Gesamtreaktion der Wasserspaltung unter dem solaren Spektrum ermöglichen, oder alternativ unter Elektronenaufnahme innerhalb eines solar aktivierten Z-Schemas effizient die Halbreaktion der Wasserstofffreisetzung betreiben.

Während die beiden Verbindungen Bi₂WO₆ und BiVO₄ bereits umfangreich untersucht wurden, hat die fotoelektrochemisch verwandte Verbindung SnWO₄ bisher kaum Aufmerksamkeit erfahren. So sind experimentelle Studien zur fotokatalytischen Wirksamkeit von SnWO₄ bis jetzt auf das Volumenmaterial, welches aber als gewichtigen Nachteil naturgemäß nur eine geringe spezifische Oberfläche aufweist, beschränkt; vgl. I.-S. Cho, C.H. Kwak, D.W. Kim, S. Lee, K.S. Hong, J.Phys.Chem. C 2009, 113, 10647. Dies ist überraschend, da theoretische Arbeiten daraufhin hindeuten, dass SnWO₄ angesichts seiner kleineren Bandlücke und damit verbesserten Absorption sowie seiner erhöhten Lochleitfähigkeit den bekannten, unter sichtbarem Licht arbeitenden Fotokatalysatoren prinzipiell überlegen sein könnte; vgl. A. Walsh, Y. Yan, M. N Huda, M.M. AI-Jassim, S.-H. Wie, Chem. Mater. 2009, 21, 547. Wie Jeitschko und Sleight 1972 als erste berichtet haben, existiert SnWO₄ als n-Typ-Halbleiter in einer tiefroten Niedertemperatur (α-Form) und einer strahlend gelben Hochtemperaturphase (β-Form); vgl. W.Jeitschko, A. W. Sleight, Acta. Cryst. 1972, B28, 3174, bzw. Acta. Cryst. 1974, B30, 2088. Die jeweiligen Bandlücken wurden experimentell zu 1,6 und 2,7 eV bestimmt. Während beide Polymorphe über konventionelle Festkörperreaktion mit Partikeldurchmessern von einigen Mikrometern hergestellt wurden, ist ein kürzlich vorgestellter hydrothermaler Zugang für SnWO₄-Nanopartikel auf die dunkelrote α-Phase beschränkt; H. Dong, Z. Li, Z. Ding, H.Pan, X. Wang, X. Fu, Sens. Actuators B 2009, 140, 623; vgl. H. Dong, Z. Li, Z. Ding, H.Pan, X. Wang, X. Fu, Sens. Actuators B 2009, 140, 623.

Der vorliegenden Erfindung liegt die Aufgabe zugrunde, ein neues Fotokatalysatormaterial bereitzustellen, das befähigt ist, die Wasserspaltung insbesondere auch unter sichtbarem Licht zu ermöglichen, d.h. ein Fotokatalysatormaterial bereitzustellen, das insbesondere auch im solaren Spektrum arbeitet und dabei Wasserstoff generiert.

Diese Aufgabe wird durch die in den Ansprüchen gekennzeichneten Ausführungsformen der vorliegenden Erfindung gelöst.

Insbesondere wird gemäß der vorliegenden Erfindung die nicht-stöchiometrische Oxidverbindung mit der Formel SnₓWO₄ mit 0,6 ≤ x < 1, vorzugsweise 0,6 ≤ x ≤ 0,99, noch mehr bevorzugt, 0,9 ≤ x ≤ 0,99, aufgebaut aus gelbem β-Zinnwolframat (β-SnWO₄), d.h. β-SnₓWO₄, bereitgestellt.

Die Substöchiometrie, also die Unterbesetzung des Sn²⁺-Platzes, kann im Hinblick auf die Elektroneutralitätsbedingung ermöglicht werden, indem entweder pro Sn²⁺-Leerstelle ein Sn⁴⁺ vorliegt, oder alternativ, indem pro Sn²⁺-Leerstelle zwei Wolframatome die Ladung +5 (anstelle von +6) tragen. Beide Alternativen sind möglich und für die Verbindungsklasse der Alkalimetall/Erdalkalimetallwolframate gut belegt. Die Substöchiometrie kann aber auch in dem Vorliegen von elementarem kubischen Zinn begründet sein, insofern bisweilen im Pulverdiffraktogramm ein entsprechender Bragg-Reflex für elementares kubisches Zinn detektiert wird. Die erfindungsgemäße nicht-stöchiometrische Oxidverbindung lässt sich dann als β-Sn₁₋ₙWO₄ · n Sn (0<n≤0,4) beschreiben, wobei das elementare kubische Zinn im Diamant-Typ (α-Zinn) oder als kubische Hochdruckmodifikation vorliegen kann. Nanopartikel können auch bei Normaldruck aufgrund des inneren Drucks (d.h. der Krümmung der Oberfläche) in Hochdruckmodifikationen vorliegen. Die Nichtstöchiometrie (d.h. der Wert x) des β-Zinnwolframats stellt sich durch innere Ausscheidung von elementarem kubischen Sn ein. Üblicherweise liegt dabei dann ein Stoffmengenanteil von 2 bis 20%, insbesondere 4 bis 10%, Sn als Nebenphase vor. Unabhängig davon, ob die jeweiligen Nanopartikelproben als SnₓWO₄ mit 0,6 ≤ x < 1 oder β-Sn₁₋ₙWO₄ · n Sn (0<n≤0,4) vorliegen, sind die Eigenschaften dieser Proben, d.h. Bandabstand, BET-Oberfläche, Zeta-Potential, Partikelgröße bzw. fotokatalytische Aktivität, für diese Proben im Rahmen der Messgenauigkeit nicht unterscheidbar.

Erfindungsgemäß wurde überraschenderweise festgestellt, dass sich die nicht-stöchiometrische Oxidverbindung β-SnₓWO₄ in äußerst einfacher Weise mittels einer Templat-freien Synthese bei Raumtemperatur herstellen lässt. Durch Fällung bei Raumtemperatur in wässriger Phase, ausgehend von jeweils wässrigen oder alkoholischen Lösungen von Sn(II)-Ionen, beispielsweise als Halogenidsalz oder Nitratsalz, bzw. von WO₄²⁻ Ionen oder anderen ionischen Wolframat-Quellen wie z.B. [W₁₂O₄₁]¹⁰⁻, beispielsweise als Alkalimetallsalz oder Ammoniumsalz, vorzugsweise ausgehend von Lösungen von SnCl₂ und Na₂WO₄ ·2H₂O, können nicht-agglomerierte, redispergierbare, hellgelbe SnWO₄-Nanopartikel erhalten werden, die eine hohe spezifische Oberfläche aufweisen.

Nach der Herstellung liegt β-SnₓWO₄ (0,6 ≤ x < 1,0) in röntgenamorpher Form vor. Wie bereits erwähnt, kann elementares kubisches Sn (im Diamant-Typ (α-Zinn) oder als kubische Hochdruckmodifikation) als Nebenphase zum β-SnWO₄ auftreten. Im Hinblick auf die stöchiometrisch durchgeführte Synthese scheint die Anwesenheit von elementarem kubischen Sn für die von (x = 1) abweichende Stöchiometrie des SnWO₄ plausibel. Beim Erhitzen auf etwa 600 °C (in N₂-Atmosphäre) kristallisiert die röntgenamorphe Phase als rotes α-SnWO₄. Die fotokatalytische Aktivität dieser Phase ist deutlich reduziert. Das Vorliegen von reinem α-SnWO₄ belegt aber die Zusammensetzung der zunächst hergestellten röntgenamorphen Phase, d.h. β-SnₓWO₄.

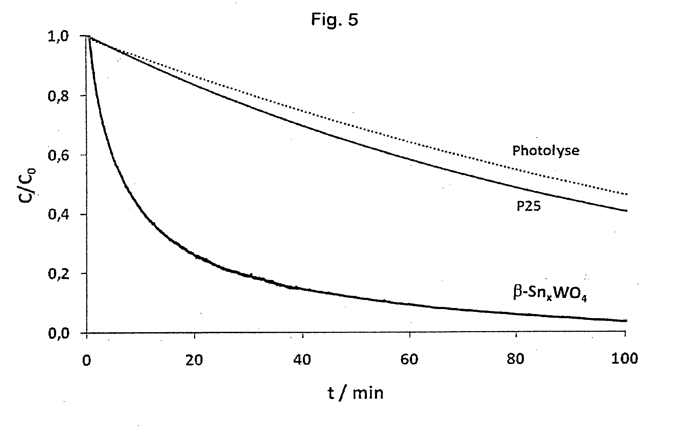

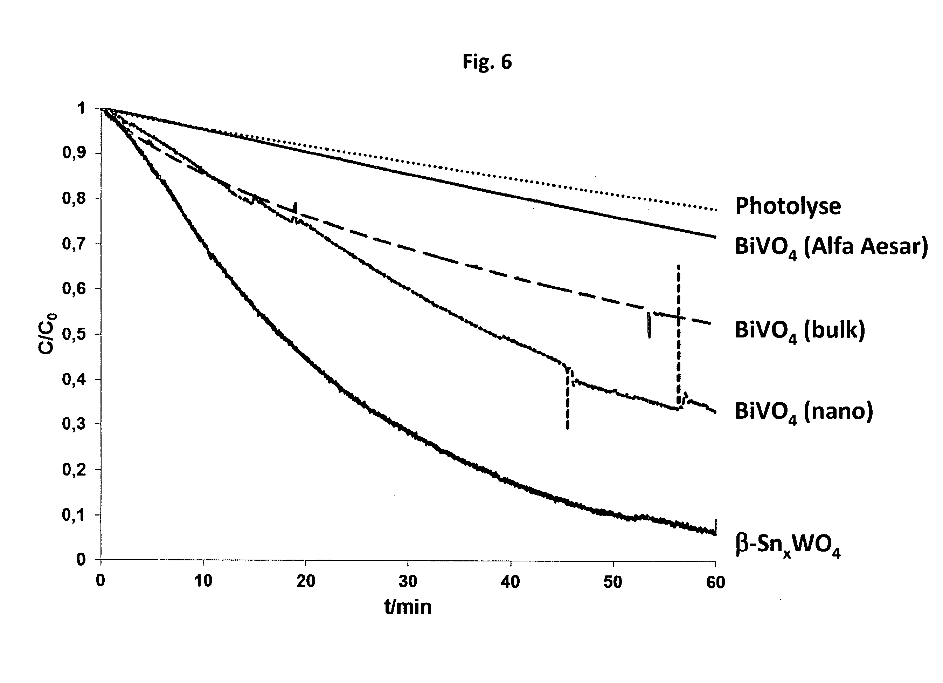

Die erfindungsmäße neue Verbindung β-SnₓWO₄ zeigt eine sehr hohe fotokatalytische Aktivität bei Bestrahlung mit sichtbarem Licht, insbesondere auch im Vergleich zu TiO₂ oder BiVO₄; vgl. Figuren 5 und 6. Die fotokatalytische Aktivität bezieht sich dabei auf die Wasserreinigung wie auf die Wasserspaltung bzw. Wasserstoffgenerierung.

Die erfindungsmäße neue Verbindung β-SnₓWO₄ weist eine Bandlücke im Bereich von zwischen 1,0-3,0 eV, vorzugsweise 1,0-2,5 eV, auf, abhängig insbesondere von dem Wert von x, der Modifikation und einer gegebenenfalls vorgenommenen Dotierung. Zum Beispiel weist die erfindungsmäße neue Verbindung Sn₁₋ₙWO₄ · n Sn mit n= 0,05±3 bzw. β-Sn_{0,95}WO₄ eine optische Bandlücke um 2,2 eV auf.

Vorzugsweise liegt β-SnₓWO₄ in röntgenamorpher Form vor. Das Oxid kann aber auch, zumindestens teilweise, in teilkristalliner Form vorliegen, wobei hier mit teilkristalliner Form Kristallite der Größe von kleiner als 1 Mikrometer gemeint sind.

Vorzugsweise liegt das erfindungsgemäße β-SnₓWO₄ in nanoskaliger Form mit Partikeldurchmesser von 2 bis 200 nm, vorzugsweise Partikeldurchmesser von 5 bis 50 nm, besonders bevorzugt Partikeldurchmesser von 15 bis 20 nm vor, gemessen mittels dynamischer Lichtstreuung unter Verwendung von Polystyrol-Küvetten (Nanosizer ZS von Malvern Instruments). Aufgrund seiner Partikelgröße weist β-SnₓWO₄ eine sehr hohe spezifische Oberfläche im Bereich von 10 bis 200 m²/g, vorzugsweise 50 bis 80 m²/g auf, gemessen mittels BET-Isotherme unter N₂-Adsorption. Die spezifische Oberfläche beeinflusst wesentlich die fotokatalytische Eigenschaft. Zum Beispiel weist Sn₁₋ₙWO₄ · n Sn mit n= 0,05±3 bzw. β-Sn_{0,95}WO₄ eine spezifische Oberfläche von 71,1 m²/g auf, wohingegen TiO₂ Anatas (Degussa P25) als Referenzkatalysator für den Stand der Technik eine spezifische Oberfläche von nur 50 m²/g aufweist.

Die Nanopartikel werden in wässriger Lösung hergestellt, sind in Wasser sehr gut dispergierbar und weisen einen isoelektrischen Punkt von, falls vorhanden, kleiner pH 2 auf. Aufgrund einer hohen Ladungsstabilisierung in Folge von spontaner Deprotonierung dissoziierbarer, funktioneller Gruppen an der Partikeloberfläche (insbesondere dissoziierter Hydroxyfunktionen) zeigen die Nanopartikel über einen weiten pH-Bereich (3,5 bis 9,5) ein negatives Zeta-Potential ζ von zwischen -40 und -50 mV.

Ein weiterer Gegenstand der vorliegenden Erfindung betrifft die Verwendung der nicht-stöchiometrischen Oxidverbindung β-SnₓWO₄ als Fotokatalysator. Der Fotokatalysator kann dabei zur Wasserreinigung, aber auch zur Entfernung von Schmutz bzw. Flecken von Oberflächen wie z.B. Fassadenputz (Stichwort "Selbstreinigungseffekt"), sowie zur Wasserspaltung bzw. zur Freisetzung von Wasserstoff aus Wasser (Wasserstoffgenerierung), vorzugsweise unter Bestrahlung mit Tageslicht, eingesetzt werden. Die Verwendung zur Wasserreinigung schließt die fotokatalytische Reinigung von Abwässern bzw. die Aufbereitung von Trinkwasser, d.h. die Zersetzung von im Wasser gelösten organischen Verunreinigungen aus Industrieabwässern bzw. Verunreinigungen mit Farbstoffen, Pestiziden, Fungiziden, Insektiziden, Düngemitteln, Verunreinigungen mit bakteriellen Keimen oder Pilzen, etc., ein.

Der Fotokatalysator kann für die Fotokatalyse auch in Gemischen mit anderen Substanzen oder als Beschichtung auf einem Substrat (z.B. Metallelektrode, Glas) vorliegen. Auch kann hierfür eine Dotierung mit weiteren Metallkationen oder Chalkogenid- oder Halogenidanionen vorgesehen werden. Im Falle einer solchen Dotierung können beispielsweise einwertige Kationen wie Li⁺, Na⁺, K⁺, Rb⁺, Cs⁺, Cu⁺, Ag⁺, Au⁺, Ga⁺ oder In⁺ auf dem Sn²⁺-Gitterplatz vorliegen. Zweiwertige Kationen auf dem Sn²⁺-Gitterplatz können Mg²⁺, Ca²⁺, Sr²⁺, Ba²⁺, Mn²⁺, Fe²⁺, Co²⁺, Ni²⁺, Pd²⁺, Pt²⁺, Ge²⁺, Pb²⁺ bzw. Eu²⁺ sein. Dreiwertige Kationen auf dem Sn²⁺-Gitterplatz können V³⁺, Cr³⁺, Fe³⁺, Co³⁺, Al³⁺, Ga³⁺, In³⁺, As³⁺, Sb³⁺ bzw. Bi³⁺ sein. Auch ein partieller Austausch von W gegen Ti, Zr, Cr, Mo, Re, Si oder P ist dotierungsweise möglich. Eine derartige Dotierung kann im Bereich von 0,1 bis 40 Atom-%, bezogen auf die Oxidverbindung, vorzugsweise 0,1 bis 5 Atom-% liegen.

Die fotokatalytische Aktivität von β-SnₓWO₄ unter Bestrahlung mit Tageslicht ist deutlich höher als im Falle von TiO₂-Anatas, welches der im Stand der Technik üblicherweise eingesetzte Fotokatalysator ist, sowie im Vergleich zu BiVO₄ als einem Referenzkatalysator, der auch im sichtbaren Licht aktiv ist. Zudem beinhaltet BiVO₄ den Nachteil, dass Vanadate als toxisch bzw. cancerogen gelten. Als Referenz ist der Abbau von Methylenblau durch β-SnₓWO₄ ca. 5 bis 30 mal schneller, im allgemeinen 5 bis 10 mal schneller als im Falle von TiO₂-Anatas (Degussa P25) bzw. BiVO₄. Bevorzugt findet die fotokatalytische Reaktion dabei in neutralem Wasser unter Tageslichtbestrahlung statt. Die fotokatalytische Reaktion kann aber auch in anderen Lösungsmitteln, bei anderen pH-Werten und bei anderen Wellenlängen (z.B. UV-Licht) stattfinden. Die fotokatalytische Reaktion kann sich ebenfalls auf andere Moleküle als Methylenblau sowie auch auf einen Abbau von Zellen, Bakterien oder anderen Keimen und Krankheitserregern beziehen.

Insbesondere kann die fotokatalytische Aktivität von β-SnₓWO₄ auch zur Spaltung von Wasser bzw. zur Freisetzung von Wasserstoff aus Wasser (Wasserstoffgenerierung) eingesetzt werden. Bevorzugt findet die fotokatalytische Wasserspaltung bzw. Wasserstoffgenerierung in neutralem Wasser unter Tageslichtbestrahlung statt. Die fotokatalytische Wasserspaltung bzw. Wasserstoffgenerierung kann aber auch in Gemischen mit anderen Lösungsmitteln, bei anderen pH-Werten und bei anderen Wellenlängen (z.B. UV-Licht) stattfinden. Die fotokatalytische Reaktion bezieht sich bevorzugt auf die Entwicklung von Wasserstoff, kann aber auch spezifisch auf die Sauerstofferzeugung abzielen.

Des Weiteren kann die fotokatalytische Aktivität von β-SnₓWO₄ zur Durchführung chemischer Reaktionen genutzt werden. Bevorzugt findet dabei die fotokatalytische Reaktion in neutralem Wasser unter Tageslichtbestrahlung statt. Die fotokatalytische Reaktion kann aber auch in anderen Lösungsmitteln, bei anderen pH-Werten und bei anderen Wellenlängen (z.B. UV-Licht) stattfinden. Bevorzugt bezieht sich die fotokatalytische Reaktion auf eine organischchemische Reaktion.

Schließlich kann die fotokatalytische Aktivität von β-SnₓWO₄ auch zur Kombination mit einem anderen fotokatalytisch aktiven Material oder einer elektrochemischen Halbzelle unter Nutzung der Wasserspaltung bzw. Wasserstoffgenerierung und Ladungsträgergenerierung zur Umwandlung in elektrische Energie eingesetzt werden.

Die Figuren zeigen:

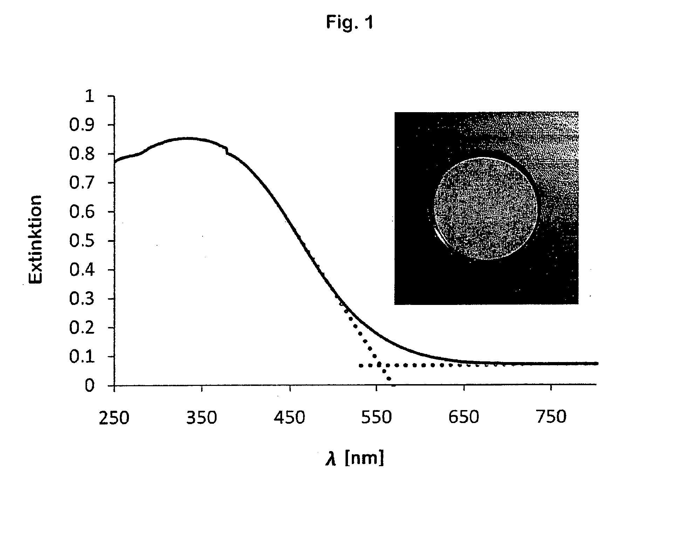

Fig. 1 zeigt das UV-VIS-Spektrum von β-Sn₁₋ₙWO₄ · n Sn mit n= 0,05±3, gemessen als Pulverprobe, zur Bestimmung der optischen Bandlücke.

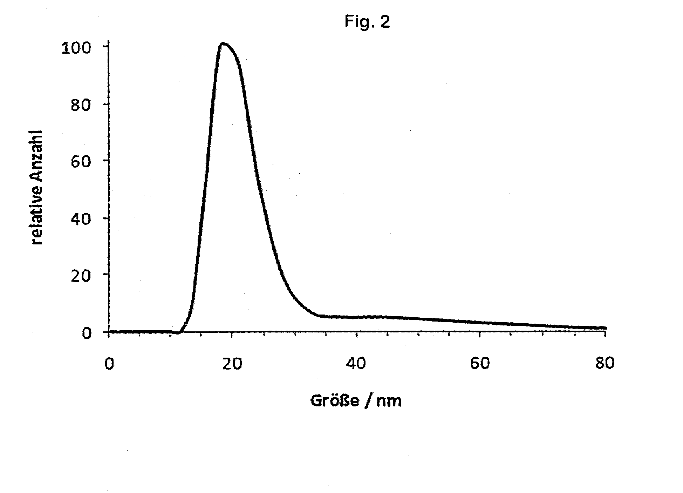

Fig. 2 zeigt die Partikelgröße bzw. Partikelgrößenverteilung für β-Sn₁₋ₙWO₄ · n Sn mit n= 0,05±3 in wässriger Lösung, bestimmt durch dynamische Lichtstreuung.

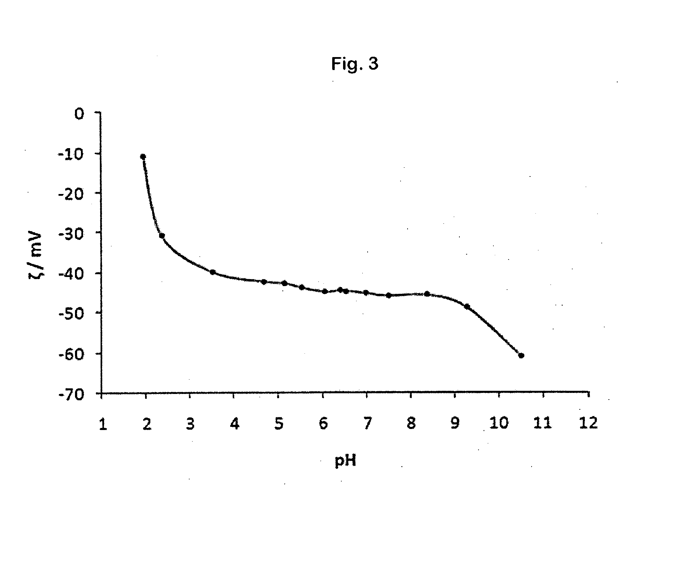

Fig. 3 zeigt das Zeta-Potential von β-Sn₁₋ₙWO₄ · n Sn mit n= 0,05±3 in wässriger Lösung und in Abhängigkeit des pH-Wertes, bestimmt durch dynamische Lichtstreuung.

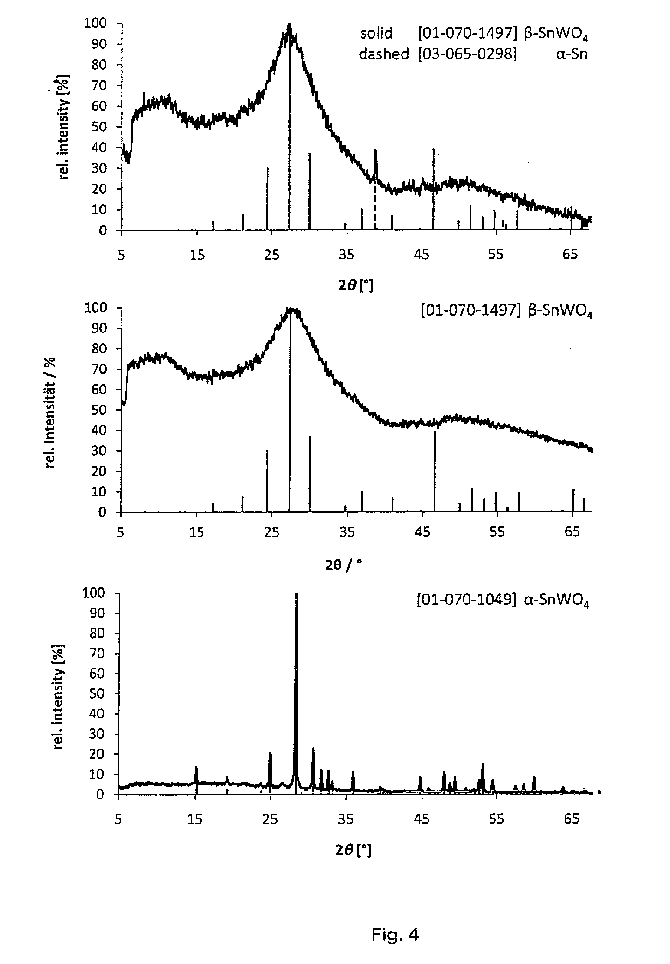

Fig. 4 zeigt oben das Röntgendiffraktogramm von β-Sn₁₋ₙWO₄ · n Sn mit n= 0,05±3, d.h. röntgenamorphes β-SnₓWO₄ mit kubischem Sn als Nebenphase, wobei gleichzeitig die Referenzdiffraktogramme von β-SnWO₄ und kubischem Zinn (hier Diamant-Typ) angegeben sind. In der Mitte ist das Röntgendiffraktogramm von β-SnₓWO₄ gezeigt, wobei gleichzeitig das Referenzdiffraktogramm von β-SnWO₄ angegeben ist. In diesem Röntgendiffraktrogramm sieht man das elementare Zinn nicht mehr, was daran liegen kann, daß (i) die Verbindung röntgenamorph ist, (ii) der Gehalt von elementarem Zinn unter ca. 3 % liegt und im XRD nicht mehr erkennbar ist, oder (iii) daß die Oxidverbindung zwar unterstöchiometrisch ist, d.h. Sn⁴⁺ und/oder W⁵⁺ vorliegt, aber kein elementares Zinn enthält. Unten ist das entsprechende Röntgendiffraktogramm nach dem Erhitzen der Substanz auf 600 °C in N₂-Atmosphäre, d.h. von rotem α-SnWO₄, gezeigt, wobei auch gleichzeitig das Referenzdiffraktogramm von α-SnWO₄ angegeben ist.
Fig. 5 zeigt die fotokatalytische Aktivität von β-SnₓWO₄ am Beispiel der Degradation von Methylenblau in Wasser (pH 7, 25 °C) unter Bestrahlung mit Tageslicht (simuliert durch OSRAM XENOPHOT HLX 64634 Halogenlampe, 3300 K). Als Vergleich sind die Degradation von Methylenblau durch TiO₂-Anatas (Degussa P25) als Referenzkatalysator für den Stand der Technik sowie die einfache Fotolyse von Methylenblau ohne Katalysator gezeigt.
Fig. 6 zeigt die fotokatalytische Aktivität von β-SnₓWO₄. Beispiel der Degradation von Methylenblau in Wasser (pH 7, 25 °C) unter Bestrahlung mit Tageslicht (simuliert durch OSRAM XENOPHOT HLX 64634 Halogenlampe, 3300 K). Als Vergleich sind die Degradation von Methylenblau durch BiVO₄ als Referenzkatalysator, der auch im sichtbaren Licht aktiv ist, sowie die einfache Fotolyse von Methylenblau ohne Katalysator gezeigt. Als BiVO₄ wurden ein von Alfa Aesar GmbH im Handel erhältliches BiVO₄, ein nach Literaturvorschrift (S. Kohtani, et al., Chem. Lett. 2002, 7, 660) hergestelltes BiVO₄ (bulk) sowie ein selbst hergestelltes nanoskaliges BiVO₄ (nano) eingesetzt.

Wie aus den Figuren 5 und 6 ersichtlich, zeigt das erfindungsgemäße Material eine deutlich gesteigerte fotokatalytische Aktivität gegenüber den entsprechend gewählten Referenzkatalysatoren. Eine Quantifizierung kann anhand der Zeitkonstanten erfolgen, die für die Degradation von Methylenblau gefunden werden.
BiVO₄ (Alfa Aesar): 1 x 10⁻⁴/s
BiVO₄ (bulk): 1 x 10⁻⁴/s
BiVO₄ (nano): 3 x 10⁻⁴/s
β-SnₓWO₄ (in nanoskaliger Form): 8 x 10⁻⁴/s
TiO₂-Anatas (Degussa P25, nano): 1,5 x 10⁻⁴/s

Die vorliegende Erfindung wird anhand der folgenden, nicht-einschränkenden Beispiele näher erläutert.

### Synthese

Die SnₓWO₄-Nanopartikel wurden über eine Fällungsreaktion unter Nutzung elektrostatischer Stabilisierung synthetisiert. In einem typischen Fall wurden 0,33 mmol SnCl₂ in 10 mL Ethanol gelöst. Unter heftigem magnetischem Rühren wurde diese Lösung bei Raumtemperatur zu 50 mL einer äquimolaren wässrigen Lösung von Na₂WO₄ · 2H₂O gegeben. Alternativ wurden für beide Edukte wässrige, höher konzentrierte Lösungen verwendet, wobei die maximal verwendeten Konzentrationen bei 2,2 M lagen. In jedem Fall wurde die sofortige Fällung eines kräftig gelben Feststoffs beobachtet. Der Niederschlag wurde durch Zentrifugation (15 min, 25,000 Upm) abgetrennt, und mehrfach in destilliertem Wasser redispergiert und erneut abzentrifugiert. Optional wurde die gewaschene Suspension zum Abtrennen von Agglomeraten für 2 min bei 10,000 Upm zentrifugiert. In diesem Fall war das Zentrifugat eine wässrige Suspension von deutlich unter 100 nm kleinen Nanopartikeln (0,13 Gew.-%, 45% Ausbeute als trockenes Pulver bezogen auf die Edukte), die ohne stabilisierende Zusätze sehr stabil sind. Pulvermaterial wurde durch Zentrifugation und Trocknen bei 60 °C an der Raumluft erhalten. Nachfolgend wurde das Pulver bei Raumtemperatur im Vakuum getrocknet, um verbliebene flüchtige Adsorbate zu entfernen.

### Photokatalytische Tests

Die photokatalytische Aktivität wurde durch den oxidativen Abbau der Modellsubstanz Methylenblau (MB) unter simuliertem Tageslicht unter Nutzung einer OSRAM XENOPHOT HLX 64634 Halogen Lampe (3300 K) bestimmt. Die Abbaurate des Farbstoffs MB wurde durch die Aufnahme der Variation des Absorptionsmaximums im Extinktionsspektrum von MB (664 nm) mittels eines Varian Cary 100 Spektrometer gemessen. Für kontinuierliche *in-situ* Messungen wurde eine mit einer Schlauchpumpe betriebene Durchflussküvette benutzt. Kommerziell erhältliches TiO₂-Anatas-Pulver (Degussa P25) bzw. BiVO₄, wie vorstehend ausgeführt, wurden als Referenz-Verbindungen herangezogen. Vor jedem Experiment wurden gleiche molare Mengen des jeweiligen Katalysators mittels Ultrabeschallung in destilliertem Wasser dispergiert. Anschließend wurde jeweils eine wässrige MB-Lösung zu den Suspensionen gegeben und magnetisch im Dunkeln gerührt, bis ein homogenes Gemisch erhalten wurde. Die Suspension wurde in ein Becherglas gegeben, weiterhin magnetisch gerührt und belichtet. Zu jedem Zeitpunkt wurden nur 60 vol-% eines Ansatzes direkt belichtet, während sich das übrige Volumen in der Küvette oder den Zuleitungen befand. In jedem Experiment wurde eine Suspension, die von gleicher Konzentration an Katalysator, aber frei von MB war, unter gleichen Bedingungen zu Kalibrationszwecken gemessen. Es wurde darauf geachtet, nur gründlich gewaschene Pulver zu verwenden, da andernfalls MB von verbliebenen Sn²⁺ Ionen leicht zu der farblosen Leukoform von MB reduziert werden kann, was einen schnelleren oxidativen Abbau vortäuscht. Die beiden Reaktionen können aber unterschieden werden, da die Ausbleichung durch Reduktion deutlich rascher verläuft und reversibel ist, während der oxidative Abbau mit einer dauerhaften Entfärbung einhergeht. Zudem verbraucht die Reduktion Sn²⁺-Ionen, während die Oxidation katalytischer Natur ist.

## Patentansprüche

1. Nicht-stöchiometrische Oxidverbindung mit der Formel SnₓWO₄ mit 0,6 ≤ x < 1, aufgebaut aus gelbem β-Zinnwolframat.

2. Nicht-stöchiometrische Oxidverbindung gemäß Anspruch 1, wobei 0,6 ≤ x ≤ 0,99, mehr bevorzugt 0,9 ≤ x ≤ 0,99.

3. Nicht-stöchiometrische Oxidverbindung gemäß Anspruch 1 oder 2, welche eine Bandlücke im Bereich von zwischen 1,0 bis 3,0 eV aufweist.

4. Nicht-stöchiometrische Oxidverbindung gemäß einem der Ansprüche 1 bis 3, welche in röntgenamorpher Form vorliegt.

5. Nicht-stöchiometrische Oxidverbindung gemäß einem der Ansprüche 1 bis 4, welche Partikeldurchmesser von 2 bis 200 nm, vorzugsweise Partikeldurchmesser von 5 bis 50 nm, besonders bevorzugt Partikeldurchmesser von 15 bis 20 nm aufweist.

6. Nicht-stöchiometrische Oxidverbindung gemäß einem der Ansprüche 1 bis 5, welche eine spezifische Oberfläche im Bereich von 10 bis 200 m²/g, vorzugsweise 50 bis 80 m²/g aufweist.

7. Nicht-stöchiometrische Oxidverbindung gemäß einem der Ansprüche 1 bis 6, wobei die Oxidverbindung als β-Sn₁₋ₙWO₄ · n Sn (0<n≤0,4) vorliegt, wobei das elementare Zinn als elementares kubisches Zinn im Diamant-Typ (α-Zinn) oder in der kubischen Hochdruckmodifikation vorliegen kann.

8. Verfahren zur Herstellung der nicht-stöchiometrischen Oxidverbindung gemäß einem der Ansprüche 1 bis 7 bei Raumtemperatur durch Fällung in wässriger Phase, ausgehend von jeweils wässrigen oder alkoholischen Lösungen von Sn(II)-Ionen bzw. WO₄²⁻ Ionen oder anderen Wolframat-Quellen.

9. Verwendung der ternären Oxidverbindung gemäß einem der Ansprüche 1 bis 7 oder hergestellt durch das Verfahren gemäß Anspruch 8 als Fotokatalysator.

10. Verwendung gemäß Anspruch 9, wobei der Fotokatalysator zur Entfernung von Schmutz bzw. Flecken von Oberflächen, einschließlich Fassadenputz, eingesetzt wird.

11. Verwendung gemäß Anspruch 9, wobei der Fotokatalysator zur Spaltung von Wasser oder zur Wasserstoffgenerierung unter Bestrahlung mit Tageslicht eingesetzt wird.

12. Verwendung gemäß Anspruch 9, wobei der Fotokatalysator zur Wasserreinigung, einschließlich der fotokatalytischen Reinigung von Abwässern bzw. der Aufbereitung von Trinkwasser, eingesetzt wird.

## Claims

1. A non-stoichiometric oxide compound having the formula SnₓWO₄ with 0.6 ≤ x < 1, composed of yellow β-tin tungstate.

2. The non-stoichiometric oxide compound according to claim 1, wherein 0.6 ≤ x ≤ 0.99, more preferred 0,9 ≤ x ≤ 0.99.

3. The non-stoichiometric oxide compound according to claim 1 or 2 which has a band gap in the range of between 1.0 to 3.0 eV.

4. The non-stoichiometric oxide compound according to any one of claims 1 to 3, which is present in X-ray amorphous form.

5. The non-stoichiometric oxide compound according to any one of claims 1 to 4, which has particle diameters of 2 to 200 nm, preferably particle diameters of 5 to 50 nm, more preferably particle diameters of 15 to 20 nm.

6. The non-stoichiometric oxide compound according to any one of claims 1 to 5, which has a specific surface area in the range of 10 to 200 m²/g, preferably 50 to 80 m²/g.

7. The non-stoichiometric oxide compound according to any one of claims 1 to 6, wherein the oxide compound is present as β-Sn₁₋ₙWO₄ · n Sn (0<n≤0.4), wherein the elemental tin can be present as elemental cubic tin in the diamond type (α-tin) or in the cubic high pressure modification.

8. A process for the preparation of the non-stoichiometric oxide compound according to any one of claims 1 to 7 at room temperature by precipitation in aqueous phase, starting from aqueous or alcoholic solutions of Sn(II)ions and WO₄²⁻ ions or other tungstate sources, respectively.

9. Use of the ternary oxide compound according to any one of claims 1 to 7 or prepared by the process according to claim 8 as photocatalyst.

10. The use according to claim 9, wherein the photocatalyst is used for the removal of dirt or stains, respectively, from surfaces, including wall plaster.

11. The use according to claim 9, wherein the photocatalyst is used for water splitting or hydrogen generation by means of radiation with daylight.

12. The use according to claim 9, wherein the photocatalyst is used for water purification including the photocatalytic purification of waste water or drinking water treatment, respectively.

## Revendications

1. Composé d'oxyde non stoechiométrique de formule SnₓWO₄ où 0,6 ≤ x < 1, constitué de tungstate d'étain β jaune.

2. Composé d'oxyde non stoechiométrique selon la revendication 1, dans lequel 0,6 ≤ x ≤ 0,99, de manière davantage préférée, 0,9 ≤ x ≤ 0,99.

3. Composé d'oxyde non stoechiométrique selon la revendication 1 ou 2, qui présente une bande interdite dans la plage entre 1,0 à 3,0 eV.

4. Composé d'oxyde non stoechiométrique selon l'une des revendications 1 à 3, qui se présente sous une forme amorphe aux rayons X.

5. Composé d'oxyde non stoechiométrique selon l'une des revendications 1 à 4, qui présente un diamètre particulaire de 2 à 200 nm, de préférence, un diamètre particulaire de 5 à 50 nm, de manière particulièrement préférée, un diamètre particulaire de 15 à 20 nm.

6. Composé d'oxyde non stoechiométrique selon l'une des revendications 1 à 5, qui présente une surface spécifique dans la plage de 10 à 200 m²/g, de préférence de 50 à 80 m²/g.

7. Composé d'oxyde non stoechiométrique selon l'une des revendications 1 à 6, dans lequel le composé d'oxyde se présente sous la forme de β-Sn₁₋ₙWO₄·n Sn (O<n≤0,4), dans lequel l'étain élémentaire se présente sous forme d'étain cubique élémentaire de type diamant (étain α) ou dans la modification cubique haute pression.

8. Procédé de production du composé d'oxyde non stoechiométrique selon l'une des revendications 1 à 7 à température ambiante par précipitation en phase aqueuse, à partir de solutions aqueuses ou alcooliques, respectivement, d'ions Sn(II) ou d'ions WO₄²⁻ ou d'autres sources de tungstate.

9. Utilisation du composé d'oxyde ternaire selon l'une des revendications 1 à 7, ou produit par le procédé selon la revendication 8 comme photocatalyseur.

10. Utilisation selon la revendication 9, dans laquelle le photocatalyseur est utilisé pour éliminer les salissures ou les taches de surface, comprenant le crépi de façades.

11. Utilisation selon la revendication 9, dans laquelle le photocatalyseur est utilisé pour le clivage de l'eau ou pour la génération d'hydrogène sous un rayonnement à la lumière du jour.

12. Utilisation selon la revendication 9, dans laquelle le photocatalyseur est utilisé pour le nettoyage de l'eau, comprenant le nettoyage photocatalytique des eaux usées ou la préparation d'eau potable.
